# EUROPÄISCHE PATENTSCHRIFT

(11) **EP 2 531 807 B1**
(45) Veröffentlichungstag und Bekanntmachung des Hinweises auf die Patenterteilung: **27.01.2016**
(21) Anmeldenummer: 11705150.8
(22) Anmeldetag: 28.01.2011
(51) Int. Cl.: F42C 17/04, F41A 21/32, F42C 11/00, G01P 3/66

(54) **VERFAHREN UND VORRICHTUNG ZUR PROGRAMMIERUNG EINES PROJEKTILS**
METHOD AND DEVICE FOR PROGRAMMING A PROJECTILE
PROCÉDÉ ET DISPOSITIF POUR PROGRAMMER UN PROJECTILE

(30) Priorität: 01.02.2010 DE 102010006528
(43) Veröffentlichungstag der Anmeldung: 12.12.2012
(73) Patentinhaber: Rheinmetall Air Defence AG, 8050 Zürich (CH)
(72) Erfinder: FRICK, Henry, Roger, CH-8442 Hettlingen (CH)
(74) Vertreter: Dietrich, Barbara
(86) Internationale Anmeldenummer: PCT/EP2011/000388
(87) Internationale Veröffentlichungsnummer: WO 2011/092022

(56) Entgegenhaltungen:
- DE-A1-102006 058 375
- US-A- 4 144 815
- US-A- 5 894 102
- US-B1- 7 506 586

## Beschreibung

Die Erfindung beschäftigt sich mit der Problematik der Programmierung eines Projektils während des Rohrdurchlaufs und/oder Durchlauf durch die Mündungsbremse. Die damit verbundene Vorrichtung eignet sich der Weiteren zu einer V₀ Messung sowie in Abrundung des Ganzen auch für einen Energieübertrag auf das Projektil.

Für programmierbare Munitionen müssen dem Projektil Informationen z. B. bezüglich seiner Detonationszeit und/oder Flugweg mitgeteilt - diesem also aufprogrammiert - werden. Bei Systemen, bei denen die Detonationszeit aus der gemessenen Mündungsgeschwindigkeit V₀ berechnet wird, kann die Information erst an der Mündung und/oder im Flug weitergegeben werden. Erfolgt die Programmierung noch vor dem Austritt aus dem Waffenrohr, fliegt das Projektil in der Regel an einer Programmiereinheit mit der Mündungsgeschwindigkeit V₀ vorbei und ist damit in relativer Bewegung zur Programmiereinheit.

Eine bekannte Programmiereinheit wird mit der CH 691 143 A5 beschrieben. Mit Hilfe einer Sendespule werden die Informationen über eine Gegenspule im/am Projektil induktiv übertragen. Diese Programmiereinheit weist einen massiven Aufbau auf, was sich aufgrund der Masse und des Drehmoments negativ auf das Geschütz auswirken kann. Gleichzeitig kann eine ungeschirmte Sendespule der Programmierbarkeit zur ungewollten Abstrahlung führen, da die Spule auch als Antenne wirkt. Das abgestrahlte Signal kann erfasst und aus diesem Rückschlüsse auf den Standort des Geschützes gezogen werden.

Aus der WO 2009/085064 A2 ist ein Verfahren bekannt, bei dem die Programmierung durch Nachsenden von Lichtstrahlen vorgenommen wird. Dazu weist das Geschoss umfangsseitig optische Sensoren auf.

Die US 5,894,102 A offenbart ein Verfahren sowie eine Vorrichtung zur Übertragung von Daten an einen programmierbaren Geschosszünder beim Durchlauf eines Geschosses durch ein Waffenrohr. Dazu berechnet die Feuerleitanlage die Mündungsgeschwindigkeit des Projektils und tempiert mit dieser Information das Projektil, wozu die Feuerleitanlage ein Signal an das Projektil sendet. Die Vorrichtung umfasst eine sich selbst korrigierende Zündeinrichtung. Diese befindet sich teilweise an der Waffe und teilweise in der Zündelektronik des Geschosses. Korrigiert werden sollen Übertragungsfehler. Dazu werden In einem Codierer diese berechneten Daten in Form eines Bit-Datenwortes umgewandelt und an einem Modulator übertragen. Im Modulator erfolgt für die Übertragung dieser codierten Kontrolldaten die Amplitudenmodulation einer Trägerfrequenz. Dieses modulierte Signal wird an das Geschoss gesendet und dort demoduliert. Die Übertragung erfolgt durch eine Spule in der Verlängerung der Mündung. Geschossseitig wird das Signal decodiert und mit dem errechneten Zündsignal verglichen. Bei einer fehlerhaften Übertragung wird das Zündsignal korrigiert.

Die nicht vor veröffentlichte DE 10 2009 024 508 A1 beschäftigt sich mit einem Verfahren zur Korrektur der Flugbahn einer endphasengelenkte Munition, speziell mit der Geschossprägung dieser Geschosse bzw. Munition im Mittelkaliberbereich. Hierbei wird vorgeschlagen, nach einem Feuerstoß (Dauerfeuer, schnelles Einzelfeuer) jedes einzelne Geschoss separat anzusprechen und dabei zusätzliche Informationen für das Einzelgeschoss für die Richtung des Erdmagnetfeldes zu übermitteln. Die Geschossprägung erfolgt auf dem Prinzip der Leitstrahllenkung von Geschossen. Jedes Geschoss liest dabei nur den für das Geschoss bestimmten Leitstrahl und kann anhand weiterer Informationen seine absolute Rolllage im Raum bestimmen, um so zur richtigen Auslösung des Korrekturimpulses zu gelangen.

Alternative Übertragungsmöglichkeiten, beispielsweise mittels Mikrowellensender, sind dem Fachmann unter anderem aus der EP 1 726 911 A1 bekannt.

Die Programmierung während des Fluges ist daher zwar technisch möglich, jedoch unterliegt auch diese einer einfachen Störung.

Die Erfindung stellt sich die Aufgabe, ein System zu schaffen, das einfach aufgebaut eine optimale Programmierung ermöglicht.

Gelöst wird die Aufgabe durch die Merkmale des Patentanspruchs 1 bzw. 8.

Vorteilhafte Ausführungen sind in den Unteransprüchen aufgezeigt.

Dabei geht die Erfindung von der Idee aus, die Programmierung induktiv und/oder kapazitiv während des Durchlaufs des Projektils durch das Waffenrohr bzw. Mündungsbremse vorzunehmen. Vorgeschlagen wird, einen Hohlleiter für die Programmierung zu nutzen, da das elektromagnetische Feld in einem Hohlleiter konzentriert ist.

Die Nutzung eines Hohlleiters unterhalb der Grenzfrequenz zur Messung der Mündungsgeschwindigkeit eines Projektil oder dergleichen ist bereits aus der DE 10 2006 058 375 A bekannt. Diese schlägt vor, das Waffenrohr bzw. das Abschussrohr und/oder Teile der Mündungsbremse als Hohleiter zu nutzen (als Hohlleiter gilt ein Rohr mit einer charakteristischen Querschnittsform, das eine sehr gut elektrisch leitende Wand besitzt. Technisch weit verbreitet sind vor allem Rechteck- und Rund-Hohlleiter), welches jedoch unter der Grenzfrequenz des betreffenden Hohlleiter-Mode betrieben wird. Die WO 2009/141055 A führt diese Idee weiter und kombiniert zwei Messmethoden der V₀Messung miteinander.

Der Hohlleiter wird nunmehr nicht (nur) für die V₀ Messung verwendet sondern erfindungsgemäß für die Programmierung. Neben dem Hohlleiter weist das Programmiersystem bzw. die Programmiervorrichtung einen Sende-Koppler für die Programmierung auf, der von einem Signalerzeuger gespeist wird. Das zu programmierende Projektil besitzt für die Programmierung einen Empfangs-Koppler, der funktional mit dem Sende-Koppler verknüpft ist. Im Projektil befindet sich zudem wenigstens ein programmierbarer Prozessor etc., der das vom Empfangs-Koppler aufgefangene Signal verwertet und das Projektil programmiert. Mit Hilfe eines Kontrollsignals eines mit dem Hohlleiter funktional verbundnen Empfangs-Koppler kann in einer bevorzugten Ausführung die Programmierung überprüft werden.

Der Hohlleiter für die Programmierung kann das Waffenrohr, die Mündungsbremse oder ein zusätzliches Teil zwischen dem Ende des Waffenrohrs und dem Anfang der Mündungsbremse sein oder auch am Ende der Mündungsbremse angebracht werden. Als bevorzugt hat sich die Einbindung im Bereich vor der Mündung der Mündungsbremse gezeigt, wenn beispielsweise auch eine Energieübertragung auf das Geschoss bzw. Projektil vorgesehen ist.

Der Signalerzeugter (z. B. Oszillator) liefert, wie auch für die V₀ Messung, ein Signal mit konstanter Mittelfrequenz, welche unterhalb der kleinsten Grenzfrequenz des Hohlleiters betrieben wird. Gegeben durch die Geometrie und Art des Sendekopplers (Spule, Dipol etc.) werden mehrere Hohlleiter-Moden (TEₘₙ mit m= 0, 1, 2 ... und n= 1, 2, 3...) angeregt. Der Signalerzeuger erzeugt entweder einen Träger im Dauerstrich-Betrieb (CW-Betrieb) oder ein moduliertes Signal.

Ist vorgesehen, mit Hilfe des oder eines weiteren Hohlleiters die V₀ Messung durchzuführen, muss die Programmierung nach der V₀ Messung erfolgen. Hier hat es sich dann ebenfalls als bevorzugt gezeigt, den Hohlleiter für die Programmierung nach der Mündungsbremse einzubinden.

Die Mündungsgeschwindigkeit V₀ selbst kann vorzugsweise vor und/oder nach dem Projektil gemessen bzw. bestimmt werden. Bei der Messung vor dem Projektil wird die Tatsache berücksichtigt, dass die Spitze des Projektils beim Durchtritt des Hohlleiters das elektromagnetische Feld beeinflusst. Bei der Messung nach dem Projektil wird die im Wesentlichen flache oder plane Fläche des Bodens ausgenutzt, wodurch die Messung unabhängig von der Form der Spitze des Projektils erfolgt. Hierbei beeinflusst der Boden das elektromagnetische Feld. Diese jeweilige Änderung wird durch einen Empfangskoppler erfasst und einer Auswerteeinrichtung zugeführt. Ein derartiges Verfahren ist aus der WO 2009/141055 A1 bekannt. Der Abstand zwischen einem Sendekoppler, der seinerseits die Signale des Oszillators erhält, und dem Empfangskoppler ist variabel und kann je nach Modenselektion des Hohleiters individuell gewählt werden, ist aber abhängig vom Kaliber, der Innenabmessung des Hohlleiters sowie der Frequenz.

Die Vorrichtung kann des Weiteren um ein Energieübertragungssystem ergänzt oder mit diesem kombiniert werden. Für programmierbare Munitionen muss dem Projektil Energie für die darin integrierte Elektronik und für das Starten der Zündkette zur Verfügung gestellt werden. Die Übertragung erfolgt bevorzugt induktiv und/oder kapazitiv, wozu der Hohlleiter genutzt werden kann. Für die Energieübertragung wird ein bereits vorhandener oder weiterer Sende- Koppler genutzt, der einen Sensor im Projektil mit der notwendigen Energie in Form einer dritten Frequenz beaufschlagt, der wiederum einen mit dem Sensor elektrisch verschalteten Speicher lädt. Die Energieübertragung muss ihrerseits vor der Programmierung erfolgen, sodass sich als bevorzugt gezeigt hat, wenn für die Programmierung der Hohlleiter am Ende der Mündungsbremse angebracht wird und dadurch der Abstand zwischen der Energieübertragung und der Programmierung ausreichend ist, die Programmierung vorzunehmen.

Durch die Feldkonzentration im Hohlleiter wird für das benötigte Signal - zu - Rauschverhältnis (S/N) weniger Speise-Energie benötigt. Durch die Wahl der Frequenz unterhalb der Grenzfrequenz ist nur eine geringe Abstrahlung nach Außen vorhanden, die Programmierung störresistenter.

Anhand eines Ausführungsbeispiels mit Zeichnung soll die Erfindung näher erläutert werden. Es zeigt in skizzenartiger Darstellung:
- Fig. 1: eine Programmiereinheit,
- Fig. 2: ein Prozessdiagramm zur Abbildung des Ablaufs der Programmierung,
- Fig. 3: eine Erweiterung der Vorrichtung mit einer V₀ Messung sowie mit einer Energieübertragungseinrichtung.

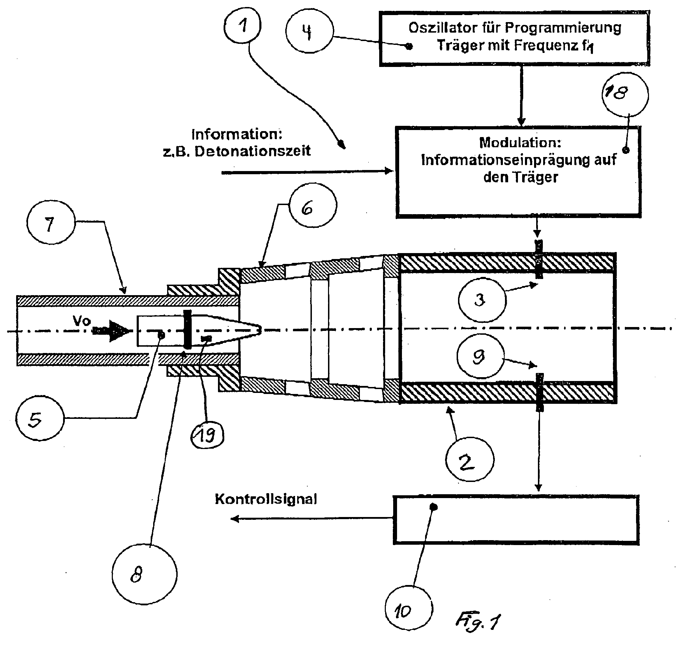

Fig. 1 zeigt eine Programmiereinheit oder Programmiervorrichtung 1. Die Programmiereinheit 1 besteht aus wenigstens einem Hohlleiter 2 bzw. Hohlleiterabschnitt(en) sowie zumindest aus einem Sende- Koppler 3, der von einem Oszillator 4 mit einer Frequenz f₁ gespeist wird. Mit 5 ist ein Projektil gekennzeichnet, dem beim Durchgang durch die Programmierungseinheit 1 die notwendige Information - z.B. Zerlegezeit - aufgeprägt werden soll. Der Hohlleiter 2 kann dabei einer Mündungsbremse 6 (wenn vorhanden) nachgeschaltet (in Schussrichtung gesehen) oder zwischen Mündungsbremse 6 und einem Waffenrohr 7 eingebunden sein (siehe Fig. 4 - ähnlich der Vorrichtung für eine Energieübertragung, wenn diese nicht eingebunden ist).

Die Funktionsweise bzw. das Verfahren zur Programmierung ist wie folgt:

Das Signal mit der Frequenz f₁ befindet sich unterhalb der Grenzfrequenz des betreffenden Hohlleiter-Modes. Damit die Programmierung von der Größe der Mündungsgeschwindigkeit V₀ unabhängig ist, sollte die Frequenz > 0Hz sein. Das bewirkt, dass die V₀ von langsamen als auch schnellen Projektilen keinen Einfluss auf die Programmierung hat. Der Träger der Frequenz f₁ wird mit der Information moduliert (18), das modulierte Signal dann zum Sende- Koppler 3 geführt. Der Sende- Koppler 3 erregt nun das entsprechende elektromagnetische Feld im Hohlleiter 2 bzw. regt es an. Durchläuft das Projektil 5 den Hohlleiter 2, empfängt das Projektil 5 das Signal berührungslos mit kapazitiver und / oder induktiver Kopplung mittels eines im Projektil 5 befindlichen Empfang-Kopplers 8. Hier eignen sich beispielweise eine Spule auf dem Geschoss bzw. Projektil 5, ein im / am Projektil 5 eingebundener Dipol aber auch ein Schlitzstrahler (Schlitz(e) sind in der Oberfläche eingebunden) etc. Im Projektil 5 ist mit dem Empfangs- Koppler 8 ein Prozessor 19 oder dergleichen elektrisch verschaltet, der die Programmierung im Projektil 5 vornimmt.

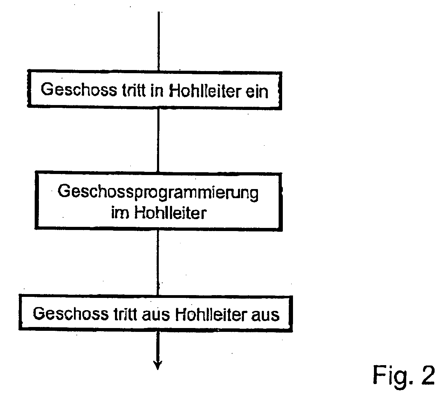

Ein von einem im/ am Hohlleiter 2 befindlichen Empfangs- Koppler 9 empfangenes und von einer mit dem Koppler 9 verbundene Empfangseinrichtung 10 gesendetes Kontrollsignal kann zur Kontrolle der Programmierung genutzt werden, ist aber nur bedingt notwendig, sodass auf diese Kontrolle auch verzichtet werden könnte. - Fig. 2 zeigt in einer Übersicht den Ablauf dieser Programmierung.

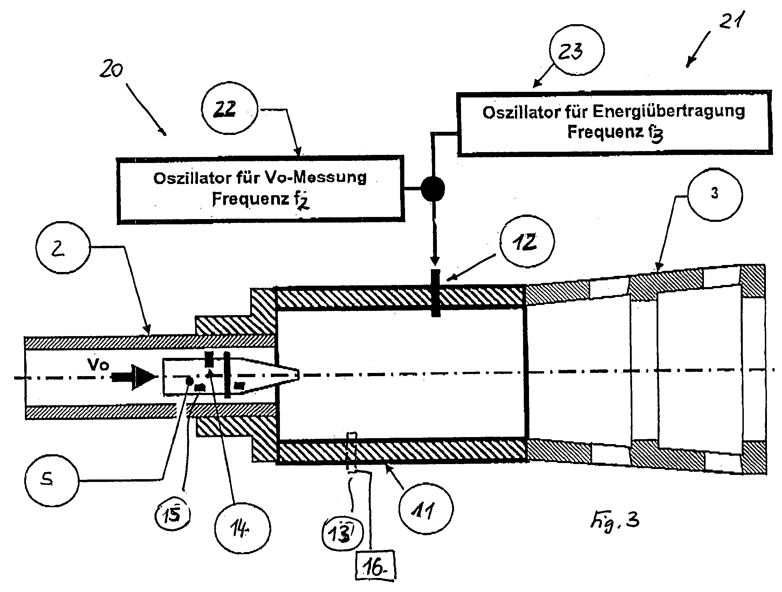

In Weiterführung kann die Programmierung mit einem Energieübertrag und/oder einer V₀-Messung kombiniert werden. Dieses spiegelt sich in der Fig. 3 wieder.

Die Frequenzen f₂ und f₃ werden für die V₀-Messung als auch Energieübertragung ebenfalls bevorzugt optimiert, wenn die für die Messung als auch Energieübertragung verwendeten (dieselbe f₂ = f₃) Frequenzen bereits optimal ist.

Da die Programmierung zeitlich nach einer V₀-Messung z. B. mittels einer Vorrichtung 20 und einer Energieübertragung mittels Energieübertragungseinheit 21 erfolgt, sollten die Bauelemente (Koppler) für die Messung und Übertragung innerhalb der Mess- und Programmiereinrichtung in Bewegungsrichtung des Geschosses vor dem Hohlleiter 2 der Programmierung eingebunden werden. Als eine bewährte Anordnung hat sich die Einbindung eines zusätzlichen Hohlleiters 11 zwischen dem Waffenrohr 7 und einer vorhandenen Mündungsbremse 2 gezeigt. Dieser ist dabei Bestandteil der Vorrichtung 20 als auch der Einheit 21.

Durchläuft das Projektil 5 den Hohlleiter 11 wird die Mündungsgeschwindigkeit V₀ mittels Sende-Koppler 12 und Empfangs-Koppler 13 in bekannter Art und Weise die Mündungsgeschwindigkeit V₀ gemessen. Dazu wird der Sende-Koppler 12 mit der Frequenz f₂ durch einen Signalerzeuger 22 gespeist. Das für die Messung benötigte Empfangssignal wird vom Empfangs- Koppler 13 empfangen und an eine Auswerteeinheit 16 gegeben. Die daraus ermittelte Mündungsgeschwindigkeit kann dann der Programmiereinheit 1 zugeführt und über den Modulator 18 als Informationssignal dem Träger mit der Frequenz f₁ aufmoduliert werden.

Für die zusätzliche Energieübertragung besitzt das Projektil 5 einen Sensor 14, welcher das Signal mit der Frequenz f₃ einer weiteren Signalerzeugers 23 empfängt und einen Speicher 15 im Projektil 5 lädt. Beim Durchfliegen erhält das Projektil 5 die nötige Energiemenge, sodass der Speicher 15 nach Verlassen des Hohlleiters bzw. Hohlleiterabschnittes 11 aufgeladen ist. Dabei kann derselbe Sende- Koppler 12 verwendet werden, der jedoch für die Energieübertragung vorzugsweise von einem weiteren Signalerzeuger 17 gespeist wird.

Die V₀ Messung kann vor und/oder nach der Energieübertragung durchgeführt werden. Beide Verfahren sind jedoch vor der Programmierung durchzuführen.

## Patentansprüche

1. Verfahren zur Programmierung eines Projektils (5) während des Durchlaufs durch ein Waffenrohr (7), Mündungsbremse (6) oder dergleichen mittels einer Programmiereinheit (1), mit den Schritten:
- das Programmieren erfolgt innerhalb des Durchlaufs durch einen Hohlleiter (2), der unter der Grenzfrequenz des betreffenden Hohlleiter-Modes (TE, TM) betrieben wird,
- ein Signalerzeuger (4) liefert ein Signal mit konstanter Frequenz (f₁), welche unterhalb der kleinsten Grenzfrequenz des Hohlleiters (2) betrieben wird,
- dem Träger der Frequenz (f₁) wird eine für die Programmierung notwendige Information in einem Modulator (18) aufmoduliert und dem Projektil (5) aufgeprägt.

2. Verfahren nach Anspruch 1, **dadurch gekennzeichnet, dass** im Hohlleiter (2, 11) eine V₀-Messung des Projektils (5) mittels einer für die Messung erzeugten Frequenz (f₂) vorgenommen werden kann, die zeitlich jedoch vor der Programmierung liegt.

3. Verfahren nach Anspruch 2, **dadurch gekennzeichnet, dass** die daraus ermittelte Mündungsgeschwindigkeit (V₀) der Programmiereinheit (1) zugeführt und über den Modulator (18) als Informationssignal dem Träger der Frequenz (f₁) aufmoduliert werden kann.

4. Verfahren nach Anspruch 2 oder 3, **dadurch gekennzeichnet, dass** das entsprechende elektromagnetische Feld im Hohlleiter (2, 11) angeregt wird, sodass die Frequenz (f₂) am Projektil (5) reflektiert und ausgewertet werden kann.

5. Verfahren nach einem der Ansprüche 1 bis 4, **dadurch gekennzeichnet, dass** im Hohlleiter (2, 11) eine Energieübertragung auf das Projektil (5) mittels einer für die Energieübertragung erzeugten Frequenz (f₃) erfolgen kann.

6. Verfahren nach einem der Ansprüche 1 bis 5, **dadurch gekennzeichnet, dass** die Frequenzen (f₁₋₃) > 0Hz sind.

7. Verfahren nach einem der Ansprüche 1 bis 6, **dadurch gekennzeichnet, dass** durch die Geometrie und Art eines Sende-Kopplers (3) mehrere Hohlleiter-Moden (TE) angeregt werden.

8. Vorrichtung zur Programmierung eines Projektils (5) während des Durchlaufs durch ein Waffenrohr (7), Mündungsbremse (6) oder dergleichen mittels einer Programmiereinheit (1) mit den Merkmalen:
- die Programmiereinheit (1) umfasst wenigstens einen Hohlleiter (2) für Programmierungszwecke, der das Waffenrohr (7), die Mündungsbremse (6) oder ein zusätzliches Teil zwischen dem Ende des Waffenrohrs (7) und dem Anfang der Mündungsbremse (6) sein kann oder am Ende der Mündungsbremse (6) zusätzlich angebracht ist und unter der Grenzfrequenz des betreffenden Hohlleiter-Modes (TE, TM) betrieben wird,
- wenigstens einen Sende-Koppler (3), der von einem Signalerzeuger (4) mit einer Frequenz (f₁) gespeist wird,
- wenigstens einen Modulator (18), in dem auf den Träger der Frequenz (f₁) die für das Projektil (5) vorgesehenen Informationen aufmoduliert werden, sowie
- wenigstens einen am/im Projektil (5) eingebundenen Empfangs-Koppler (8), der mit einem Speicher oder Prozessor (19) im Projektil (5) elektrisch verschaltet ist.

9. Vorrichtung nach Anspruch 8, **dadurch gekennzeichnet, dass** der Empfangs-Koppler (8) eine Spule auf dem Projektil (5), ein im/am Projektil (5) eingebundener Dipol und/oder ein Schlitzstrahler sein kann.

10. Vorrichtung nach Anspruch 8 oder 9, **dadurch gekennzeichnet, dass** zusätzlich ein Empfangs-Koppler (9) sowie eine mit dem Koppler (9) verbundene Empfangseinrichtung (10) eingebunden sind, dessen Signal als Kontrollsignal zur Kontrolle der Programmierung genutzt werden kann.

11. Vorrichtung nach Anspruch 10, **dadurch gekennzeichnet, dass** vor der Programmiereinrichtung (1) für eine V₀ Messung und / oder eine Energieübertragung Baugruppen (12, 13, 22, 23), wie Sende-Koppler (12), Empfangs-Koppler (13) und Signalerzeuger (22, 23) einer Messvorrichtung (20) und / oder einer Energieübertragungseinheit (21) eingebunden sind, die des Weiteren einen vorzugsweise gemeinsamen Hohlleiter (11) umfassen.

12. Vorrichtung nach Anspruch 11, **dadurch gekennzeichnet, dass** das Projektil (5) für die Energieübertragung einen Sensor (14) aufweist, welcher das Signal mit der Frequenz (f₃) der Signalerzeugers (23) empfängt und einen Speicher (15) im Projektil (5) lädt.

## Claims

1. Method for programming a projectile (5) during passage through a weapon barrel (7), a muzzle brake (6) or the like by means of a programming unit (1), having the following steps:
- the programming is carried out during passage by means of a waveguide (2) which is operated below the cut-off frequency of the relevant waveguide mode (TE, TM),
- a signal generator (4) provides a signal at a constant frequency (f₁) which is operated below the lowest cut-off frequency of the waveguide (2),
- an item of information required for the programming is modulated onto the carrier for the frequency (f₁) in a modulator (18) and is imprinted on the projectile (5).

2. Method according to Claim 1, **characterized in that** a V₀ measurement of the projectile (5) can be carried out in the waveguide (2, 11) using a frequency (f₂) which is generated for the measurement and is before the programming in terms of time.

3. Method according to Claim 2, **characterized in that** the muzzle velocity (V₀) determined therefrom can be supplied to the programming unit (1) and can be modulated onto the carrier for the frequency (f₁) as an information signal using the modulator (18).

4. Method according to Claim 2 or 3, **characterized in that** the corresponding electromagnetic field is excited in the waveguide (2, 11), with the result that the frequency (f₂) can be reflected at the projectile (5) and can be evaluated.

5. Method according to one of Claims 1 to 4, **characterized in that** energy can be transmitted to the projectile (5) in the waveguide (2, 11) using a frequency (f₃) generated for the transmission of energy.

6. Method according to one of Claims 1 to 5, **characterized in that** the frequencies (f₁₋₃) are > 0 Hz.

7. Method according to one of Claims 1 to 6, **characterized in that** a plurality of waveguide modes (TE) are excited by the geometry and type of a transmission coupler (3).

8. Device for programming a projectile (5) during passage through a weapon barrel (7), a muzzle brake (6) or the like by means of a programming unit (1), having the following features:
- the programming unit (1) comprises at least one waveguide (2) for programming purposes, which waveguide may be the weapon barrel (7), the muzzle brake (6) or an additional part between the end of the weapon barrel (7) and the start of the muzzle brake (6) or is additionally fitted to the end of the muzzle brake (6) and is operated below the cut-off frequency of the relevant waveguide mode (TE, TM),
- at least one transmission coupler (3) which is supplied with a frequency (f₁) by a signal generator (4),
- at least one modulator (18) in which the information intended for the projectile (5) is modulated onto the carrier for the frequency (f₁), and
- at least one reception coupler (8) which is incorporated on/in the projectile (5) and is electrically connected to a memory or processor (19) in the projectile (5).

9. Device according to Claim 8, **characterized in that** the reception coupler (8) may be a coil on the projectile (5), a dipole incorporated in/on the projectile (5) and/or a slot antenna element.

10. Device according to Claim 8 or 9, **characterized in that** a reception coupler (9) and a receiving device (10) connected to the coupler (9) are additionally incorporated, the signal from which can be used as the control signal for controlling the programming.

11. Device according to Claim 10, **characterized in that** subassemblies (12, 13, 22, 23) such as transmission couplers (12), reception couplers (13) and signal generators (22, 23) of a measuring device (20) and/or of an energy transmission unit (21) are incorporated upstream of the programming device (1) for a V₀ measurement and/or energy transmission and also comprise a preferably common waveguide (11).

12. Device according to Claim 11, **characterized in that** the projectile (5) has, for transmitting energy, a sensor (14) which receives the signal at the frequency (f₃) of the signal generator (23) and loads a memory (15) in the projectile (5).

## Revendications

1. Procédé de programmation d'un projectile (5) pendant le passage à travers un canon d'arme (7), un frein de bouche (6) ou similaire au moyen d'une unité de programmation (1), comprenant les étapes suivantes :
- la programmation s'effectue pendant le passage à travers un guide d'ondes (2) qui fonctionne au-dessous de la fréquence de coupure du mode de guide d'ondes (TE, TM) concerné,
- un générateur de signal (4) délivre un signal ayant une fréquence constante (f₁), lequel fonctionne au-dessous de la fréquence de coupure la plus basse du guide d'ondes (2),
- une information nécessaire pour la programmation est superposée par modulation à la porteuse de la fréquence (f₁) dans un modulateur (18) et appliquée au projectile (5).

2. Procédé selon la revendication 1, **caractérisé en ce qu'**une mesure de la V₀ du projectile (5) peut être effectuée dans le guide d'ondes (2, 11) au moyen d'une fréquence (f₂) générée pour la mesure, ladite mesure ayant cependant lieu avant la programmation.

3. Procédé selon la revendication 2, **caractérisé en ce que** la vitesse initiale (V₀) ainsi déterminée est acheminée à l'unité de programmation (1) et peut être superposée par modulation à la porteuse de la fréquence (f₁) en tant que signal d'information par le biais du modulateur (18).

4. Procédé selon la revendication 2 ou 3, **caractérisé en ce que** le champ électromagnétique correspondant dans le guide d'ondes (2, 11) est excité, de sorte que la fréquence (f₂) peut être réfléchie sur le projectile (5) et interprétée.

5. Procédé selon l'une des revendications 1 à 4, **caractérisé en ce qu'**une transmission d'énergie au projectile (5) peut avoir lieu dans le guide d'ondes (2, 11) au moyen d'une fréquence (f₃) générée pour la transmission d'énergie.

6. Procédé selon l'une des revendications 1 à 5, **caractérisé en ce que** les fréquences (f₁₋₃) sont supérieures à 0 Hz.

7. Procédé selon l'une des revendications 1 à 6, **caractérisé en ce que** grâce à la forme géométrique et à la nature d'un coupleur d'émission (3), plusieurs modes de guide d'ondes (TE) sont excités.

8. Dispositif de programmation d'un projectile (5) pendant le passage à travers un canon d'arme (7), un frein de bouche (6) ou similaire au moyen d'une unité de programmation (1), possédant les caractéristiques suivantes :
- l'unité de programmation (1) comprend au moins un guide d'ondes (2) à des fins de programmation, lequel peut être le canon d'arme (7), le frein de bouche (6) ou une pièce supplémentaire entre la fin du canon d'arme (7) et le début du frein de bouche (6) ou lequel est monté en plus à la fin du frein de bouche (6) et fonctionne au-dessous de la fréquence de coupure du mode de guide d'ondes (TE, TM) concerné,
- au moins un coupleur d'émission (3) qui est alimenté à une fréquence (f₁) par un générateur de signal (4),
- au moins un modulateur (18) dans lequel l'information prévue pour le projectile (5) est superposée par modulation à la porteuse de la fréquence (f₁) et
- au moins un coupleur de réception (8) intégré sur/dans le projectile (5), lequel est connecté électriquement à un accumulateur ou un processeur (19) dans le projectile (5).

9. Dispositif selon la revendication 8, **caractérisé en ce que** le coupleur de réception (8) peut être une bobine sur le projectile (5), un dipôle intégré sur/dans le projectile (5) et/ou une antenne à fente.

10. Dispositif selon la revendication 8 ou 9, **caractérisé en ce qu'**en plus de cela sont intégrés un coupleur de réception (9) ainsi qu'un dispositif de réception (10) connecté au coupleur (9) et dont le signal peut être utilisé en tant que signal de contrôle en vue de contrôler la programmation.

11. Dispositif selon la revendication 10, **caractérisé en ce qu'**avant le dispositif de programmation (1), des sous-ensembles (12, 13, 22, 23) comme un coupleur d'émission (12), un coupleur de réception (13) et des générateurs de signal (22, 23) sont intégrés à un dispositif de mesure (20) et/ou à une unité de transmission d'énergie (21) pour une mesure de V₀ et/ou une transmission d'énergie, lesquels englobent en outre un guide d'ondes (11) de préférence commun.

12. Dispositif selon la revendication 11, **caractérisé en ce que** le projectile (5) possède pour la transmission d'énergie un capteur (14) qui reçoit le signal à la fréquence (f₃) du générateur de signal (23) et charge un accumulateur (15) dans le projectile (5).
